# EUROPEAN PATENT SPECIFICATION

(11) **EP 3 306 900 B1**
(45) Date of publication and mention of the grant of the patent: **08.05.2019**
(21) Application number: 16192802.3
(22) Date of filing: 07.10.2016
(51) Int. Cl.: H04L 29/12, H04L 29/06

(54) **DNS ROUTING FOR IMPROVED NETWORK SECURITY**
DNS-ROUTING FÜR VERBESSERTE NETZWERKSICHERHEIT
ACHEMINEMENT DNS POUR SÉCURITÉ DE RÉSEAU AMÉLIORÉE

(43) Date of publication of application: 11.04.2018
(73) Proprietor: Secucloud GmbH, 20354 Hamburg (DE)
(72) Inventor: Monner, Dennis, 22081 Hamburg (DE)
(74) Representative: Grünecker Patent- und Rechtsanwälte PartG mbB

(56) References cited:
- Justine Ellingwood: "How To Configure Bind as a Caching or Forwarding DNS Server on Ubuntu 14.04", , 1 July 2014 (2014-07-01), pages 1-10, XP055362254, Retrieved from the Internet: URL:https://www.digitalocean.com/community /tutorials/how-to-configure-bind-as-a-cach ing-or-forwarding-dns-server-on-ubuntu-14- 04 [retrieved on 2017-04-05]
- Guy Bruneau: "DNS Sinkhole", SANS Institute InfoSec Reading Room, 7 August 2010 (2010-08-07), XP055168392, Retrieved from the Internet: URL:http://www.sans.org/reading-room/white papers/dns/dns-sinkhole-33523 [retrieved on 2015-02-09]

## Description

### BACKGROUND OF THE INVENTION

### 1. Field of the Invention

The invention relates to providing network security to a client using a DNS, Domain Name System, server.

### 2. Description of the Related Art

To provide security to a client that is connected to a network such as the internet, several techniques exist that pursue different security concepts. For instance, firewall software or hardware is used at the client device or as a separate appliance to monitor and control incoming and outgoing network traffic based on predefined security rules. Antivirus software may likewise be used at the client device or in separate hardware computer appliances. There are a number of other security concepts, such as encrypting the network traffic or using a VPN, Virtual Private Network, tunnel, and each of the known techniques has its particular advantages in certain aspects, but does also have particular disadvantages. For instance, firewalls and antivirus components protect clients against attacks and malicious software, but they require frequent updates. Encryption and VPN tunnels protect communications to and from clients from being read by others, but they are often difficult to use.

Another known technique is to block domains which are known as dangerous or harmful, by means of a DNS server. DNS servers are used by clients to resolve domain names. That is, when a client wants to access an internet resource that has assigned a certain domain name, the client sends the domain name to the DNS server and receives the IP, Internet Protocol, address of this internet resource, so that the client can then access the internet resource using the IP address. There are DNS servers that add security by checking the requested domain name or its IP address, and returning the IP address unless the domain name or IP address is known as causing a security problem. Otherwise, the DNS server returns the IP address of a blocking page so that the client, when attempting to access the internet resource, actually accesses the blocking page.

While this mechanism is easy to implement at the side of the client, its security enhancement is limited. This is because the DNS server just performs a lookup of the domain name and/or IP address in respective databases, which may not result in more than just a yes/no decision on whether or not to block the desired access to the internet resource. It is not possible to add other security features such as searching for viruses, applying a content filter, checking the validity of certificates, applying parental control, or the like.

J. Ellingwood: " How to Configure Bind as a Caching or Forwarding DNS Server on Ubuntu 14.04", 1 July 2014, pages 1 to 10 discusses how to install and configure the Bind9 DNS server as a caching or forwarding DNS server on Ubuntu 14.04 machines.

G. Bruneau: "DNS Sinkhole", SANS Institute InfoSec Reading Room, 7 August 2010 describes the architecture and configuration of a complete DNS sinkhole system based on open-source software.

### SUMMARY OF THE INVENTION

The invention is what is claimed in the independent claims.

Preferred embodiments are specified in the dependent claims

An improved technique is therefore provided which adds network security to a client in a manner that is easy to implement at the side of the client, and that nevertheless allows for applying various security techniques in a simple and easily adjustable manner.

When the client sends a query to resolve a domain name to a DNS server, the DNS server selects an IP address (preferably an IPv6 address) from a range of IP addresses assigned to a network security system, and sends the selected IP address to the client. Further, mapping data that associates the domain name with the selected IP address is written to a database. When the client attempts to access a resource associated with the domain name, it sends a request to the selected IP address so that the request is routed to the network security system. The network security system obtains from the database the domain name that is stored in the mapping data as being associated to the IP address, and reissues the client request to a server representing the received domain name. The response data received from the server is forwarded to the client. The network security system applies at least one security and/or filter mechanism to prevent unsecure or unwanted content to be sent to the client.

In an embodiment, there is provided a method of operating a DNS server arranged for translating domain names to IP addresses. The method comprises receiving, from a client, a query to resolve a domain name. The method further comprises selecting an IP address from a range of IP addresses assigned to a network security system, and sending the selected IP address to the client. Furthermore, the method comprises writing mapping data to a database, where the mapping data associates the domain name with the selected IP address. The IP address selected from the range of IP addresses assigned to the network security system may be an IP address not having valid mapping data in the database at the time of selecting the IP address.

The database may be external to the DNS server. Writing the mapping data to the database then comprises sending the domain name and the selected IP address to the database.

The step of writing the mapping data to the database may further comprise sending time information to the database indicating one of the time instances when the query has been generated by the client, the query has been sent to the DNS server, the query has been received by the DNS server, the IP address has been selected, or the IP address has been sent to the client, or the current time.

The mapping data may further include a timestamp in association with the domain name and the selected IP address. The timestamp indicates one of the time instances when the query has been generated by the client, the query has been sent to the DNS server, the query has been received by the DNS server, the IP address has been selected, the IP address has been sent to the client, the domain name and the selected IP address have been sent to the database, the mapping data has been generated, or the mapping data has been written to the database.

In addition, an embodiment provides a method of operating a network security system having assigned a range of IP addresses through which the network security system is accessible. The method comprises receiving, from a client, a request to access a resource at one of the IP addresses assigned to the network security system. The method further comprises sending a query to a database that stores mapping data associating domain names with IP addresses. The query identifies the one of the IP addresses assigned to the network security system. Then, a domain name stored in the mapping data as being associated to the one of the IP addresses assigned to the network security system is received from the database. The method further comprises reissuing the request to a server representing the received domain name, and sending response data received from the server to the client. At least one security and/or filter mechanism is applied to one or more of the domain name, the server's IP address, and/or the response data, and if the at least one security and/or filter mechanism indicates that at least one predefined security and/or filter condition is met, one or both of the steps of reissuing the request to the server and sending the response data to the client are not performed.

The query may further identify one of the time instances when the client has generated the request, the client has sent the request, or the request has been received from the client, time information included in the request or the current time.

Moreover, the mapping data may further include timestamps in association with domain names and IP addresses. The method may then further comprise receiving an error message from the database if the database does not store mapping data for the one of the IP addresses assigned to the network security system having a timestamp within a predefined time window before the time identified by the query or the time of receipt of the query at the database or the time the database searches for mapping data in response to the query.

Further, there is an embodiment providing a method of operating a database storing a plurality of records each including a domain name and an IP address. The domain name is a domain name sent to a DNS server by a client, and the IP address is in a range of IP addresses assigned to the network security system. The method comprises receiving from the DNS server a domain name and an IP address, storing the received domain name and IP address in a record of the database, receiving from the network security system a request to resolve the IP address, and sending to the network security system the domain name stored in the record in association with the IP address.

The database may further store a timestamp in each record, where the timestamp reflects a time relating to the storing of the domain name and the IP address in the record. The method may then further comprise, upon receiving the request from the network security system, determining if the time difference between the timestamp and a time relating to the receiving of the request is within a predefined limit. The step of sending the domain name to the network security system may be performed only if it is determined that the time difference is within the predefined limit.

The method may further comprise sending an error message to the network security system if it is determined that the time difference is not within the predefined limit.

In an embodiment, there is provided a computer-readable storage medium storing instructions that, when executed by one or more processors, cause the one or more processors to perform any of the methods described above or elsewhere in this disclosure.

Further embodiments provide a DNS server, a network security system and a database that operate as described, and a system comprising some or all of these entities.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 illustrates an overall system according to an embodiment of the invention;
FIG. 2 is a diagram illustrating an embodiment of when the various system components of FIG. 1 communicate with each other according to the invention;
FIG. 3 is a flowchart illustrating a process performed by a client in accordance with an embodiment;
FIG. 4 is a flowchart illustrating a process performed by a DNS server in accordance with an embodiment;
FIG. 5 is a flowchart illustrating a process performed by a database according to an embodiment; and
FIG. 6 is a flowchart illustrating a process performed by a firewall server in accordance with an embodiment.

### DETAILED DESCRIPTION OF THE INVENTION

The illustrative embodiments of the present invention will be described with reference to the figure drawings wherein like elements and structures are indicated by like reference numbers.

As will be apparent from the more detailed description of various embodiments, a DNS server is used to route client requests through a network security system such as a firewall server. This allows to provide a firewall as a service, in a very efficient and adjustable way. Using this technique, any requests to internet resources and cloud services can be protected with minimum modifications at the clients.

Further, embodiments may use IPv6 (Internet Protocol version 6) addresses and thereby benefit from the enlarged address space provided by this communication protocol. IPv6 addresses have 128 bits which allow an entity to have assigned a large subnet of useable IP addresses. Taking the example of an IPv6 /64 subnet, the number of IP addresses is 2¹⁶, which is almost 1.8·10¹⁹. Thus, when using the IPv6 protocol, the embodiments may benefit from having available a huge number of different IP addresses. In the following, whenever the description of the various embodiments make use of IP addresses, these IP addresses may be considered to be IPv6 addresses. It is however noted that in other embodiments different techniques or protocols may be used.

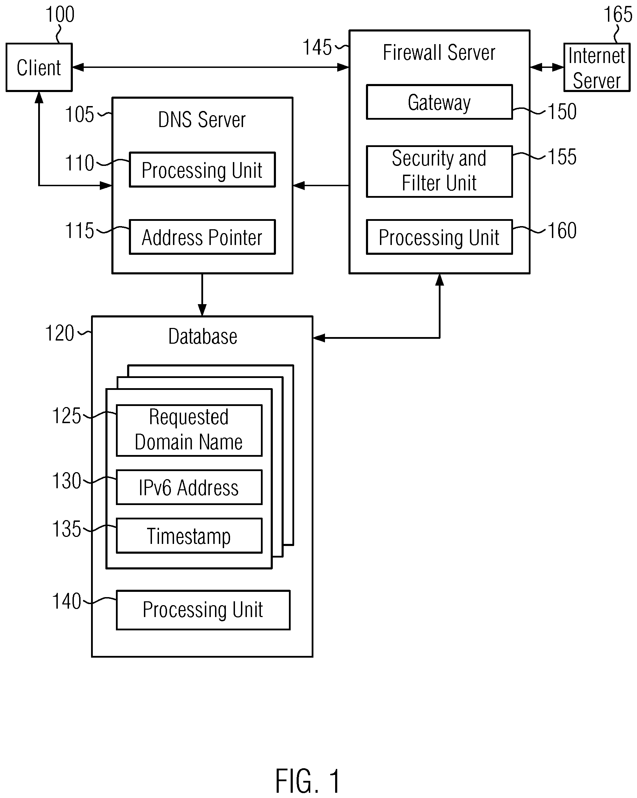

Referring first to FIG. 1 which illustrates an embodiment of a system according to the invention, there is shown a client 100 which may be of any kind of client devices, including desktop and notebook computers, mobile devices and routers. The client 100 has registered the IP address of the DNS server 105 for the purpose of using its DNS services. Thus, whenever the client 100 wants to access an internet resource such as the internet server 165, a DNS query is sent from the client 100 to the DNS server 105.

The system further includes a network security system such as a firewall server 145. While block 145 is described and shown in the drawings as being a firewall server, it is noted that any other type of network security system may be used for this purpose. The techniques supported by the network security system may include stateful packet inspection, deep packet inspection, anti-malware scanning techniques, web-content filtering, intrusion protection, user authentication, captive portals, VPN techniques, IP reputation checks, and monitoring, statistical and administrative functions.

The firewall server 145 has assigned a range of IP addresses. As mentioned above, in an embodiment, the firewall server 145 has assigned an IPv6 subnet so that the firewall server 145 can be accessed through any of the IP addresses within this subnet. Thus, the firewall server 145 is accessible through a huge number of different IP addresses.

When the client 100 issues a name resolution request to the DNS server 105, *i.e.,* when it provides the domain name of an internet server 165 in order to obtain its IP address, the DNS server 105 uses its processing unit 110 to select one of the IP addresses of the firewall server 145 and return this IP address to the client as if it was the IP address of the internet server 165.

In an embodiment, the DNS server 105 ensures that the IP address selected by the processing unit 110 is presently not in use by any other client. For this purpose, the DNS server 105 may optionally have an address pointer 115 that points to either the most recently used IP address or to the next available IP address. In this embodiment, whenever the processing unit 110 selects an IP address of the firewall server 145, it also increments the address pointer 115.

In addition, the DNS server 105 writes the domain name received from the client 100 and the selected IP address to the database 120. For this purpose, the database 120 has a number of records each storing mapping data including a requested domain name 125 and the corresponding IP address 130. The records (or mapping data) may further store a timestamp 135 which indicates a time relating to the client request, *e.g*., the time the client 100 has sent its request to the DNS server 105, the time the DNS server 105 has received this request, the time the DNS server 105 has selected an IP address, the time the DNS server 105 has communicated the domain name and IP address to the database 120, or the time the database 120 has stored the data in one of the records. The database 120 may include a processing unit 140 to perform all tasks that occur at the database 120.

As mentioned above, when the client 100 has sent its name resolution request to the DNS server 105, the DNS server 105 responds to the client 100 by providing one of the IP addresses of the firewall server 145, as if this IP address was the IP address of the internet server 165. Therefore, whenever the client 100 attempts to access the internet server 165, it actually accesses the firewall server 145. In an embodiment, the firewall server 145 includes a processing unit 160 to perform all processes necessary to perform its functions. As will be apparent from the description below, these functions include functions of a gateway 150 when the firewall server 145 reissues the request from the client 100 to the internet server 165, and returns any response data to the client 100. The functions also include those of a security and filter unit 155 that applies one or more security and/or filter mechanisms such as those of a firewall, antivirus software, whitelists or blacklists, IP reputation services, certificate authentication, or the like.

When the firewall server 145 is accessed by the client 100 at one of its IP addresses, the firewall server 145 queries the database 120 to obtain from its mapping data the domain name stored in association with the IP address at which the firewall server 145 has been accessed. When the firewall server 145 receives the domain name from the database 120, it is possible for the firewall server 145 to reissue the client request to the internet server 165.

Thus, the firewall server 145 can issue exactly that request which the client 100 would have issued if the DNS server 105 had returned the requested IP address of the internet server 165 rather than one of the IP addresses of the firewall server 145.

However, in an embodiment, the firewall server 145 does not just reissue the request by means of its gateway 150 under control of the processing unit 160, but it also applies at least one security and/or filter mechanism 155 to protect the client 100 against security risks or to provide other filtering services.

In one embodiment, the at least one security and/or filter mechanisms are applied once the database 120 has returned the domain name. This allows for avoiding reissuance of the initial request of the client 100 to the internet server 165 when the security and/or filter mechanisms indicate this internet resource should be blocked.

In another embodiment, at least one security and/or filter mechanism is applied after the request has been reissued to the internet server 165 and response data has been received therefrom. In this embodiment, the security and filter unit 155 can analyze the response data received from the internet server 165 to determine if the client 100 should be protected.

In another embodiment, security and/or filter mechanisms may be applied both before reissuing the request to the internet server 165 and after receiving response data from the internet server 165.

In FIG. 1, the internet resource which the client 100 attempts to access has been described to be the internet server 165. The internet server 165 may for instance be a web server that delivers a website when being accessed. It is however noted that any other type of internet server is envisaged as well, *i.e.,* any server that is connected to the internet, to a corporate network or other networks, and that can be requested by a client to provide a service, regardless of whether this service includes sending back response data or not.

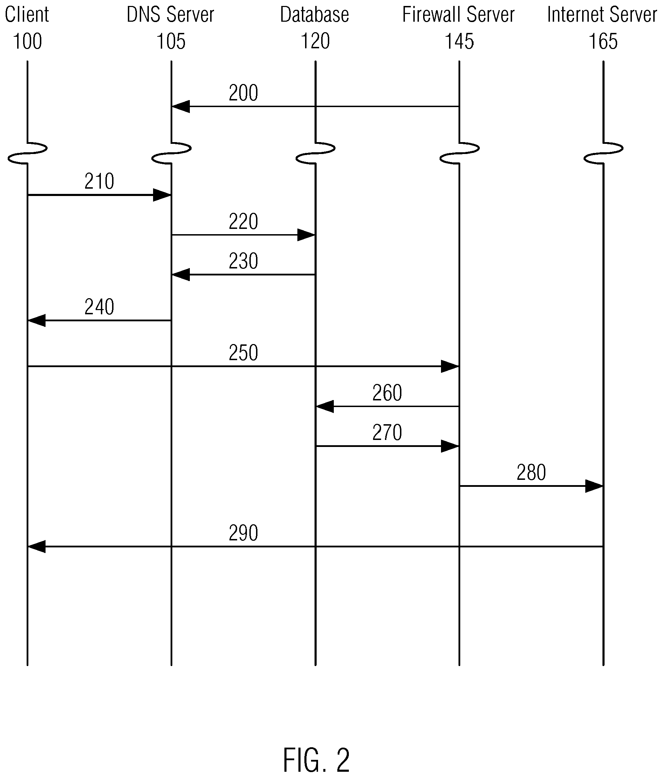

Turning now to FIG. 2, a signal chart is depicted to illustrate one embodiment of how the system of FIG. 1 may be used.

In an optional step 200, the firewall server 145 indicates to the DNS server 105 which IP addresses the DNS server 105 may use. These IP addresses are chosen from the range of addresses of the firewall server 145, *e.g*., from the firewall server's IPv6 /64 subnet. This step may be omitted if the DNS server 105 already knows the firewall server's IP addresses or if it has alternative ways to determine the usable IP address range of the firewall server 145.

In step 210, the client 100 sends a name resolution request to the DNS server 105, *i.e.,* the client 100 sends a domain name to the DNS server 105 and requests to be provided with an IP address associated with this domain name. In step 220, the DNS server 105 sends the domain name and an IP address selected from the range of IP addresses of the firewall server 145, to the database 120. In step 230, the database 120 confirms to the DNS server 105 that the domain name and IP address has been received and/or stored. It is noted that step 230 is optional. In step 240, the DNS server 105 returns the selected IP address to the client 100. In another embodiment, step 240 may be performed before step 220, or simultaneously therewith.

The client 100 then attempts to contact the internet server 165, which is an internet resource assigned to the domain name, in step 250 using the received IP address. However, since the DNS server 105 has returned an IP address of the firewall server 145, the client 100 actually accesses the firewall server 145 in step 250.

Once being accessed by the client 100, the firewall server 145 determines the IP address at which it has been accessed, and queries the database 120 in step 260 by sending an address resolution request to obtain the domain name. The database 120 returns the domain name in step 270.

The firewall server 145 then reissues the client request 250 to the internet server 165 in step 280. In an embodiment, this is done only if one or more security and/or filter mechanisms performed between steps 270 and 280 have passed successfully.

If there is any response data generated by the internet server 165 in response to the request 280, this response data may be sent to the client 100 in step 290. In an embodiment, this response data is sent directly from the internet server 165 to the client 100, not passing the firewall server 145. In another, more preferred embodiment, the response 290 passes through the firewall server 145, and the firewall server 145 may then apply one or more network security and/or filter mechanisms to analyze the response data and, if necessary, protect the client 100 by blocking the transmission.

In FIG. 1, the database 120 is shown as a separate system component external to the DNS server 105 and the firewall server 145. In another embodiment, the database 120 may be part of the DNS server 105. This embodiment simplifies the operation of the DNS server 105 as steps 220 and 230 do not require communications to be sent through the network. In this embodiment, the firewall server 145 may communicate with the DNS server 105 rather than the database 120 in steps 260, 270, and this may be advantageous as the firewall server 145 could then use Reverse DNS techniques for this purpose, which are easy to implement.

In another embodiment, the database 120 may be incorporated within the firewall server 145. This simplifies the operation of the firewall server 145 since steps 260 and 270 do no longer require external communications through the network. In this embodiment, the DNS server 105 directly communicates with the firewall server 145 in steps 220 and 230.

When the database 120 is incorporated in either the DNS server 105 or the firewall server 145, the database 120 does not require an extra processing unit 140. That is, all acts performed by the processing unit 140 may then be performed by either the processing unit 110 or the processing unit 160, respectively.

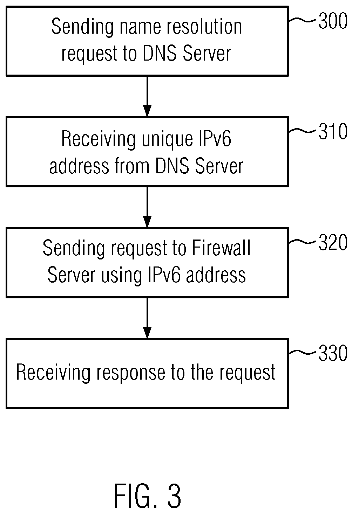

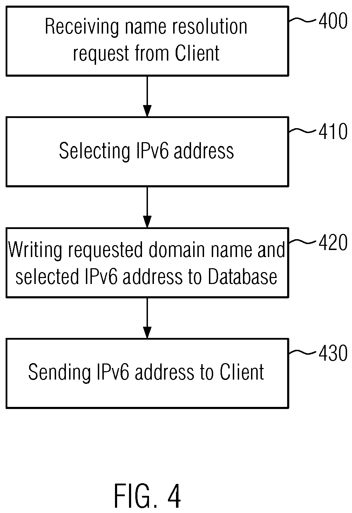

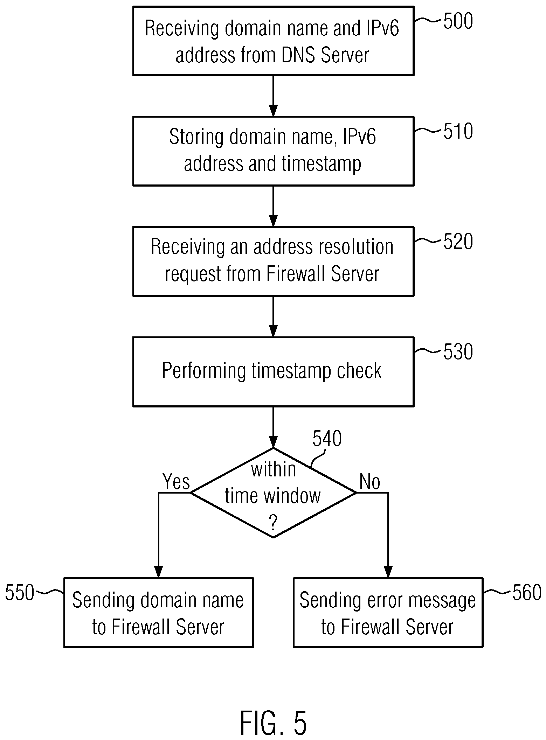

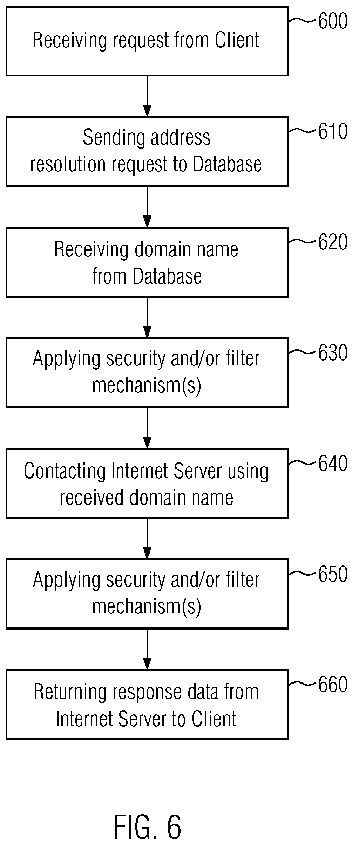

While the arrangement of the system according to an embodiment and the communication flow have been described above with reference to FIGs. 1 and 2, reference is now made to FIGs. 3 to 6, which are corresponding flow charts to illustrate the processes performed by the various system components. FIG. 3 illustrates the process of client 100, FIG. 4 illustrates the process of DNS server 105, FIG. 5 illustrates the process of the database 120, and FIG. 6 illustrates the process performed by the firewall server 145.

Turning first to FIG. 3, the client 100 starts its process by sending a name resolution request 210 to the DNS server 105 in step 300. The client 100 then receives a response 240 from the DNS server 105 in step 310, indicating one of the IP addresses of the firewall server 145. Using this IP address, the client 100 sends a request 250 to the firewall server 145 in step 320. Finally, the client 100 receives a response 290 from the internet server 165 in step 330. This response may be received from the internet server 165 directly, or through the firewall server 145.

According to FIG. 4, when the DNS server 105 receives a name resolution request 210 from the client 100 in step 400, it selects one of the IP addresses of the firewall server 145 in step 410. The DNS server 105 may then communicate through signals 220 and 230 with the database 120 in step 420 to write the domain name included in the name resolution request and the selected IP address to the database. The DNS server 105 finally sends a response 240 to the client 100 in step 430 to inform the client 100 of the selected IP address.

Referring to FIG. 5, the database 120 receives write instructions 220 from the DNS server 105 instructing the database 120 to store the domain name and the selected IP address. This data is then stored in step 510. In step 520, the database 120 receives an address resolution request 260 from the firewall server 145, and sends a response 270 to the firewall server 145 in step 550, including the domain name stored in association with the IP address.

As apparent from FIG. 5, step 510 may optionally further store a timestamp in association with the domain name and the IP address. This timestamp may then be used in the optional step 530 to perform a timestamp check. In this step, it is determined whether the timestamp stored in the database 120 is within a predefined time window before the current time (or a similar time such as that of signals 250 or 260). In an embodiment, the predefined time window has a width of one minute or less, but in other embodiments, it may be of any other width. If the predefined time window is, for instance, set to one minute, the timestamp check determines if the database record is not older than one minute. If the timestamp is within the time window, step 540 proceeds to step 550 which has already been discussed above. If, however, step 540 determines that the timestamp is not within the time window, *i.e.,* the database record has expired, the process proceeds to step 560 which optionally sends an error message to the firewall server 145.

Referring now to FIG. 6, the process performed by the firewall server 145 is depicted according to an embodiment. FIG. 6 omits the optional step 200 with which the firewall server 145 initially informs the DNS server 105 of its IP address range. In step 600, the firewall server 145 receives a request 250 from the client 100. The firewall server 145 then sends an address resolution request 260 to the database 120 in step 610, and receives a response 270 from the database 120 in step 620 including the corresponding domain name. As discussed above, the firewall server 145 may then optionally perform one or more security and/or filter mechanisms in step 630. If these security and/or filter mechanisms are either not performed, or are passed successfully, the firewall server 145 reissues the request 250 in step 640 by sending a corresponding request 280 to the internet server 165, which is essentially identical to the request 250 except for the IP address of the firewall server 145 being replaced with the IP address of the internet server 165. Again, the firewall server 145 may apply one or more optional security and/or filter mechanisms in step 650 and may then return response data 290 received from the internet server 165 to the client 100 in step 660.

In any of the above embodiments, the firewall server 145 has been described to optionally perform security and/or filter mechanisms in steps 630 and/or 650 by means of the security and filter unit 155. These security and/or filter mechanisms may determine whether at least one predefined security and/or filter condition is met. In an embodiment, one or more of these security and/or filter conditions are client specific. This allows the firewall server 145 to apply different security or filter rules to different clients.

In an embodiment, one of the acts performed by the processing unit 140 (or, if the database 120 is incorporated in the DNS server 105 or the firewall server 145, one of processing units 110 and 160, respectively) is a clean-up of the database. This clean-up may automatically remove any records from the database 120 having outdated timestamps 135. For instance, if the time window used in the timestamp check of step 530 has a width of one minute, then the clean-up may remove any database record that is older than, e.g., five minutes. Of course, these values are provided for illustrative reasons only, and other values could be used as well. It is noted that, in an embodiment, the time duration used for the clean-up is the same as the width of the time window used in step 530. In this embodiment, the database clean-up automatically deletes all database records which the firewall server 145 would disregard anyway. This advantageously removes the need to compare the timestamp with the current time or a similar time in step 540. That is, if the width of the time window is used for the database clean-up, then step 540 may simply determine if there is still a database record for the respective IP address. If so, the process proceeds to step 550, and if not, the process may optionally proceed to send an error message in step 560.

In any of the above discussed embodiments, the DNS server 105 may perform an optional database check to improve data consistency within the database 120. In this embodiment, when the DNS server 105 has selected an IP address in response to a name resolution request 210 from the client 100, the DNS server 105 optionally queries the database 120 to verify that no valid record exists in the database 120 that includes the selected IP address. As mentioned above, when using the address pointer 115, the existence of multiple records for the same IP address may be prohibited, *i.e.,* such a consistency check may then be unnecessary. In other embodiments, further mechanisms to avoid inconsistencies may be used.

Any of these techniques may be used to either determine or infer, or otherwise ensure that the IP address selected by the DNS server 105 from the range of IP addresses assigned to the firewall server 145 is an IP address not having valid records in the database, *i.e.,* that there are no valid mapping data that map the selected IP address to a domain name. In this context, mapping data may be considered to be valid when they are stored in a manner such that the domain name included in this mapping data would be sent to the firewall server 145 in response to an appropriate request. For instance, in an embodiment using timestamps, mapping data may be regarded as being valid if the timestamp is within the time window mentioned above or within another predefined time window. In other embodiments, mapping data may be considered as being valid if the mapping data exists, or if it is not marked by means of a flag or the like, as being invalid.

While the invention has been described with respect to the physical embodiments constructed in accordance herewith, it will be apparent to those skilled in the art that various modification, variation and improvements of the present invention may be made in the light of the above teachings and within the purview of the appended claims without departing from the scope of the invention. Accordingly, it is to be understood that the invention is not limited by the specific illustrative embodiments, but only by the scope of the appended claims.

## Claims

1. A method of providing network security to a client (100) using a DNS, Domain Name System, server (105) arranged for translating domain names to IP, Internet Protocol, addresses, a network security system (145) having assigned a range of IP addresses through which the network security system is accessible, and a database (120) storing a plurality of records each including a domain name and an IP address, the method comprising:
receiving (210, 400), at the DNS server, a query from the client to resolve a domain name;
selecting (410) by the DNS server an IP address from the range of IP addresses assigned to the network security system; and
sending (240, 430) the selected IP address from the DNS server to the client and writing (220, 420, 500-510) mapping data to the database, the mapping data associating the domain name with the selected IP address;
receiving (250, 600), at the network security system, a request from the client to access a resource at the selected IP address;
sending (260, 520, 610) a query from the network security system to the database, the query identifying the selected IP address;
receiving (270, 550, 620), at the network security system, from the database the domain name stored in the mapping data as being associated to the selected IP address; and
reissuing (280, 640), by the network security system, the request to a server (165) representing the received domain name, and if there is any response data generated by the server, sending (290, 660) the response data to the client, wherein the method further comprises:
applying (630, 650), by the network security system, at least one security and/or filter mechanism to one or more of the domain name, the server's IP address, and/or the response data; and
refraining from performing one or both of the steps of reissuing the request to the server and sending the response data to the client, if the at least one security and/or filter mechanism indicates that at least one predefined security and/or filter condition is met.

2. The method of claim 1, wherein the database is external to the DNS server, and the step of writing the mapping data to the database comprises:
sending the domain name and the selected IP address to the database.

3. The method of claim 2, wherein the step of writing the mapping data to the database further comprises:
sending time information to the database indicating one of the time instances when the query from the client to the DNS server has been generated by the client, the query has been sent to the DNS server, the query has been received by the DNS server, the IP address has been selected, or the IP address has been sent to the client, or the current time.

4. The method of one of claims 1 to 3, wherein the mapping data further includes a timestamp in association with the domain name and the selected IP address, the timestamp indicating one of the time instances when the query from the client to the DNS server has been generated by the client, the query has been sent to the DNS server, the query has been received by the DNS server, the IP address has been selected, the IP address has been sent to the client, the domain name and the selected IP address have been sent to the database, the mapping data has been generated, or the mapping data has been written to the database.

5. The method of claim 1, wherein the query from the network security system to the database further identifies one of the time instances when the client has generated the request, the client has sent the request, or the request has been received from the client, time information included in the request or the current time.

6. The method of claim 5, wherein the mapping data further includes timestamps in association with domain names and IP addresses, and the method further comprises:
receiving an error message from the database if the database does not store mapping data for the selected IP address having a timestamp within a predefined time window before the time identified by said query or the time of receipt of the query at the database or the time the database searches for mapping data in response to the query.

7. The method of claim 1, wherein the database further stores a timestamp in each record, the timestamp reflecting a time relating to the storing of the domain name and the IP address in the record, the method further comprising:
after sending the query from the network security system to the database, determining (530, 540) if the time difference between the timestamp and a time relating to the receiving of the request is within a predefined limit,
wherein the domain name is sent to the network security system only if it is determined that the time difference is within the predefined limit.

8. The method of claim 7, wherein an error message is sent to the network security system if it is determined that the time difference is not within the predefined limit.

9. A computer-readable storage medium storing instructions that, when executed by one or more processors, cause said one or more processors to perform the method of one of claims 1 to 8.

10. A system comprising:
a DNS, Domain Name System, server (105);
a network security system (145); and
a database (120),
wherein the DNS server is arranged for translating domain names to IP, Internet Protocol, addresses, the DNS server comprising a processing unit (110) arranged for receiving, from a client, a query to resolve a domain name, selecting an IP address from a range of IP addresses assigned to the network security system and through which the network security system is accessible, and sending the selected IP address to the client, wherein the processing unit of the DNS server is further arranged for writing mapping data to the database, wherein the mapping data associates the domain name with the selected IP address,
wherein the network security system comprises a processing unit (160) arranged for receiving, from the client, a request to access a resource at the selected IP address, sending a query to the database that stores the mapping data wherein the query identifies the selected IP address, receiving from the database a domain name stored in the mapping data as being associated to the selected IP address, reissuing the request to a server representing the received domain name, and if there is any response data generated by the server, sending response data received from the server to the client, wherein the processing unit of the network security system is further arranged for applying at least one security and/or filter mechanism to one or more of the domain name, the server's IP address, and/or the response data, and refraining from performing one or both of the steps of reissuing the request to the server and sending the response data to the client, if the at least one security and/or filter mechanism indicates that at least one predefined security and/or filter condition is met, and
wherein the database stores a plurality of records comprising a record including the domain name and the selected IP address, the database comprising a processing unit (140) arranged for receiving from the DNS server the domain name and the selected IP address, storing the received domain name and IP address in the record, receiving from the network security system the request to resolve the selected IP address, and sending to the network security system the domain name stored in the record in association with the selected IP address.

11. The system of claim 10, arranged to perform the method of any one of claims 2 to 8.

## Patentansprüche

1. Verfahren zum Bereitstellen von Netzwerksicherheit für einen Client (100) unter Verwendung eines DNS-, Domain-Name-System-Servers (105), der zum Übersetzen von Domainnamen in IP-, Internetprotokoll-, Adressen eingerichtet ist, eines Netzwerksicherheitssystems (145), das einen Bereich von IP-Adressen zugewiesen hat, über die auf das Netzwerksicherheitssystem zugegriffen werden kann, und einer Datenbank (120), die eine Vielzahl von Datensätzen speichert, die jeweils einen Domänennamen und eine IP-Adresse enthalten, wobei das Verfahren umfasst:
Empfangen (210, 400) einer Anfrage von dem Client zum Auflösen eines Domänennamens an dem DNS-Server;
Auswählen (410) einer IP-Adresse aus dem Bereich der dem Netzwerksicherheitssystem zugewiesenen IP-Adressen durch den DNS-Server; und
Senden (240, 430) der ausgewählten IP-Adresse vom DNS-Server an den Client und Schreiben (220, 420, 500-510) von Mapping-Daten in die Datenbank, wobei die Mapping-Daten den Domänennamen der ausgewählten IP-Adresse zuordnen;
Empfangen (250, 600) einer Anfrage von dem Client, auf eine Ressource an der ausgewählten IP-Adresse zuzugreifen, an dem Netzwerksicherheitssystem;
Senden (260, 520, 610) einer Anfrage von dem Netzwerksicherheitssystem an die Datenbank, wobei die Anfrage die ausgewählte IP-Adresse identifiziert;
Empfangen (270, 550, 620), an dem Netzwerksicherheitssystem, von der Datenbank des in den Mapping-Daten gespeicherten Domänennamens, der der ausgewählten IP-Adresse zugeordnet ist; und
erneutes Ausgeben (280, 640) der Anfrage durch das Netzwerksicherheitssystem an einen Server (165), der den empfangenen Domänennamen darstellt, und, falls von dem Server erzeugte Antwortdaten vorhanden sind, Senden (290, 660) der Antwortdaten an den Client, wobei das Verfahren weiterhin umfasst:
Anwenden (630, 650), durch das Netzwerksicherheitssystem, wenigstens eines Sicherheits- und/oder Filtermechanismus' auf einen oder mehrere der Domänennamen, die IP-Adresse des Servers und/oder die Antwortdaten; und
Unterlassen, einen oder beide Schritte des erneuten Ausgebens der Anfrage an den Server und des Sendens der Antwortdaten an den Client durchzuführen, wenn der wenigstens eine Sicherheits- und/oder Filtermechanismus anzeigt, dass wenigstens eine vordefinierte Sicherheits- und/oder Filterbedingung erfüllt ist.

2. Verfahren nach Anspruch 1, bei dem die Datenbank außerhalb des DNS-Servers liegt und der Schritt des Schreibens der Mapping-Daten in die Datenbank umfasst:
Senden des Domänennamens und der ausgewählten IP-Adresse an die Datenbank.

3. Verfahren nach Anspruch 2, bei dem der Schritt des Schreibens der Mapping-Daten in die Datenbank weiterhin umfasst:
Senden von Zeitinformationen an die Datenbank, aus denen, wann eine Anfrage von dem Client an den DNS-Server von dem Client generiert wurde, die Anfrage an den DNS-Server gesendet wurde, die Anfrage von dem DNS-Server empfangen wurde, die IP-Adresse ausgewählt wurde oder die IP-Adresse an den Client gesendet wurde, oder die aktuelle Uhrzeit hervorgeht.

4. Verfahren nach einem der Ansprüche 1 bis 3, bei dem die Mapping-Daten weiterhin einen Zeitstempel in Verbindung mit dem Domainnamen und der ausgewählten IP-Adresse umfassen, wobei der Zeitstempel einen der Zeitpunkte angibt, zu denen die Anfrage von dem Client an den DNS-Server von dem Client generiert wurde, die Anfrage an den DNS-Server gesendet wurde, die Anfrage von dem DNS-Server empfangen wurde, die IP-Adresse ausgewählt wurde, die IP-Adresse an den Client gesendet wurde, der Domänenname und die ausgewählte IP-Adresse an die Datenbank gesendet wurden, die Mapping-Daten generiert wurden oder die Mapping-Daten in die Datenbank geschrieben wurden.

5. Verfahren nach Anspruch 1, bei dem die Anfrage des Netzwerksicherheitssystems an die Datenbank weiterhin einen Zeitpunkt, zu dem der Client die Anfrage generiert hat, der Client die Anfrage gesendet hat, oder die Anfrage von dem Client empfangen wurde, die in der Anfrage enthaltene Zeitangaben oder die aktuelle Uhrzeit identifiziert.

6. Verfahren nach Anspruch 5, bei dem die Mapping-Daten weiterhin Zeitstempel in Verbindung mit Domänennamen und IP-Adressen enthalten und das Verfahren weiterhin umfasst:
Empfangen einer Fehlernachricht von der Datenbank, wenn die Datenbank keine Mapping-Daten für die ausgewählte IP-Adresse mit einem Zeitstempel innerhalb eines vordefinierten Zeitfensters vor der durch die Anfrage identifizierten Zeit oder dem Zeitpunkt des Empfangs der Anfrage bei der Datenbank oder der Zeit speichert, die die Datenbank in Reaktion auf die Anfrage nach Mapping-Daten sucht.

7. Verfahren nach Anspruch 1, bei dem die Datenbank weiterhin einen Zeitstempel in jedem Datensatz speichert, wobei der Zeitstempel eine Zeit widerspiegelt, die sich auf das Speichern des Domainnamens und der IP-Adresse in dem Datensatz bezieht, wobei das Verfahren weiterhin umfasst:
nach dem Senden der Anfrage von dem Netzwerksicherheitssystem an die Datenbank, Feststellen (530, 540), ob die Zeitdifferenz zwischen dem Zeitstempel und einer Zeit, die sich auf den Empfang der Anfrage bezieht, innerhalb einer vordefinierten Grenze liegt,
wobei der Domänenname nur an das Netzwerksicherheitssystem gesendet wird, wenn bestimmt wird, dass die Zeitdifferenz innerhalb der vordefinierten Grenze liegt.

8. Verfahren nach Anspruch 7, bei dem eine Fehlernachricht an das Netzwerksicherheitssystem gesendet wird, wenn bestimmt wird, dass die Zeitdifferenz nicht innerhalb der vordefinierten Grenze liegt.

9. Computerlesbares Speichermedium, das Anweisungen speichert, die, wenn sie von einem oder mehreren Prozessoren ausgeführt werden, den einen oder die mehreren Prozessoren dazu veranlassen, das Verfahren nach einem der Ansprüche 1 bis 8 auszuführen.

10. System, umfassend:
einen DNS-, Domain-Name-System-Server (105);
ein Netzwerksicherheitssystem (145); und
eine Datenbank (120),
wobei der DNS-Server dazu eingerichtet ist, Domänennamen in IP-, Internetprotokoll-, Adressen zu übersetzen, wobei der DNS-Server eine Verarbeitungseinheit (110) umfasst, die dazu eingerichtet ist, eine Anfrage von einem Client zum Auflösen eines Domänennamens zu empfangen, eine IP-Adresse aus einem Bereich von IP-Adressen auszuwählen, die dem Netzwerksicherheitssystem zugewiesen sind und durch die auf das Netzwerksicherheitssystem zugegriffen werden kann, und die ausgewählte IP-Adresse an den Client zu senden, wobei die Verarbeitungseinheit des DNS-Servers weiterhin dazu eingerichtet ist, Mapping-Daten in die Datenbank zu schreiben, wobei die Mapping-Daten den Domänennamen der ausgewählten IP-Adresse zuordnen,
wobei das Netzwerksicherheitssystem eine Verarbeitungseinheit (160) umfasst, die dazu eingerichtet ist, eine Anfrage zum Zugriff auf eine Ressource an der ausgewählten IP-Adresse von dem Client zu empfangen, eine Anfrage an die Datenbank zu senden, die die Mapping-Daten speichert, wobei die Anfrage die ausgewählte IP-Adresse identifiziert, einen Domänennamen aus der Datenbank zu empfangen, der in den Mapping-Daten als der ausgewählten IP-Adresse zugeordnet gespeichert ist, die Anfrage an einen Server, der den empfangenen Domänennamen darstellt, erneut auszugeben, und falls Antwortdaten vorhanden sind, die von dem Server generiert werden, Antwortdaten, die von dem Server empfangen werden an den Client zu senden, wobei die Verarbeitungseinheit des Netzwerksicherheitssystems weiterhin dazu eingerichtet ist, wenigstens einen Sicherheits- und/oder Filtermechanismus auf einen oder mehrere der Domänennamen, die IP-Adresse des Servers und/oder die Antwortdaten anzuwenden, und zu unterlassen, einen oder beide der Schritte des erneuten Ausgebens der Anfrage an den Server und des Sendens der Antwortdaten an den Client durchzuführen, wenn der wenigstens eine Sicherheits- und/oder Filtermechanismus anzeigt, dass wenigstens eine vordefinierte Sicherheits- und/oder Filterbedingung erfüllt ist
wobei die Datenbank eine Vielzahl von Datensätzen speichert, die einen Datensatz umfassen, der den Domänennamen und die ausgewählte IP-Adresse enthält, wobei die Datenbank eine Verarbeitungseinheit (140) umfasst, die dazu eingerichtet ist, den Domänennamen und die ausgewählte IP-Adresse von dem DNS-Server zu empfangen, den empfangenen Domänennamen und IP-Adresse in dem Datensatz zu speichern, die Anfrage zum Auflösen der ausgewählten IP-Adresse von dem Netzwerksicherheitssystem zu empfangen und den in dem Datensatz in Verbindung mit der ausgewählten IP-Adresse gespeicherten Domänennamen an das Netzwerksicherheitssystem zu senden.

11. System nach Anspruch 10, das dazu eingerichtet ist, das Verfahren nach einem der Ansprüche 2 bis 8 auszuführen.

## Revendications

1. Procédé de sécurité réseau d'un client (100) utilisant un serveur (105) DNS (système de nom de domaine) conçu pour traduire les noms de domaine en adresses IP (protocole Internet), un système de sécurité réseau (145) auquel est attribué une plage d'adresses IP des adresses rendant le système de sécurité réseau accessible, et une base de données (120) stockant une pluralité d'enregistrements comprenant chacun un nom de domaine et une adresse IP, le procédé comprenant les étapes suivantes:
la réception (210, 400), sur le serveur DNS, d'une requête du client pour résoudre un nom de domaine;
la sélection (410), par le serveur DNS, d'une adresse IP parmi la plage d'adresses IP attribuées au système de sécurité de réseau; et
l'envoi (240, 430) de l'adresse IP sélectionnée du serveur DNS au client et écrire (220, 420, 500-510) des données de mappage dans la base de données, les données de mappage associant le nom de domaine à l'adresse IP sélectionnée;
la réception (250, 600), au niveau du système de sécurité de réseau, d'une requête du client pour accéder à une ressource à l'adresse IP sélectionnée;
l'envoi (260, 520, 610) d'une requête provenant du système de sécurité de réseau à la base de données, la requête identifiant l'adresse IP sélectionnée;
la réception (270, 550, 620), au niveau du système de sécurité de réseau, à partir de la base de données, du nom de domaine stocké dans les données de mappage comme étant associé à l'adresse IP sélectionnée; et
la réémission (280, 640), par le système de sécurité du réseau, de la requête à un serveur (165) représentant le nom de domaine reçu et, si des données de réponse sont générées par le serveur, l'envoi (290, 660) des données de réponse au client, dans lequel le procédé comprend en outre les étapes suivantes:
l'application (630, 650), par le système de sécurité de réseau, d'au moins un mécanisme de sécurité et/ou de filtrage à un ou plusieurs éléments parmi le nom de domaine, l'adresse IP du serveur et/ou les données de réponse; et
sans effectuer l'une ou les deux étapes consistant à réémettre la requête au serveur ou à envoyer les données de réponse au client, si ledit au moins un mécanisme de sécurité et/ou de filtrage indique qu'au moins une condition de sécurité et/ou de filtrage prédéfinie est remplie.

2. Procédé selon la revendication 1, dans lequel la base de données est externe au serveur DNS, et l'étape d'écriture des données de mappage dans la base de données comprend:
l'envoi du nom de domaine et de l'adresse IP sélectionnée à la base de données.

3. Procédé selon la revendication 2, dans lequel l'étape consistant à écrire les données de mappage dans la base de données comprend en outre:
l'envoi d'informations temporelles à la base de données indiquant l'une des instances où la requête du client au serveur DNS a été générée par le client, la requête a été envoyée au serveur DNS, la requête a été reçue par le serveur DNS, l'adresse IP a été sélectionnée, l'adresse IP a été envoyée au client ou l'heure actuelle.

4. Procédé selon l'une des revendications 1 à 3, dans lequel les données de mappage comprennent en outre un horodatage en association avec le nom de domaine et l'adresse IP sélectionnée, l'horodatage indiquant l'une des instances temporelles où la requête du client auprès du serveur DNS a été générée par le client, la requête a été envoyée au serveur DNS, la requête a été reçue par le serveur DNS, l'adresse IP a été sélectionnée, l'adresse IP a été envoyée au client, le nom de domaine et l'adresse sélectionnée IP ont été envoyés à la base de données, les données de mappage ont été générées ou les données de mappage ont été écrites dans la base de données.

5. Procédé selon la revendication 1, dans lequel la requête allant du système de sécurité de réseau vers la base de données identifie en outre l'une des instances temporelles où le client a généré la demande, le client a envoyé la demande ou la demande a été reçue du client, les informations temporelles incluses dans la demande ou l'heure actuelle.

6. Procédé selon la revendication 5, dans lequel les données de mappage comprennent en outre des horodatages en association avec des noms de domaine et des adresses IP, et le procédé comprend en outre:
la réception d'un message d'erreur en provenance de la base de données si la base de données ne stocke pas les données de mappage pour l'adresse IP sélectionnée avec un horodatage inscrit dans une fenêtre prédéfinie avant l'heure identifiée par ladite requête ou l'heure de réception de la requête dans la base de données ou l'heure à laquelle la base de données recherche les données de mappage en réponse à la requête.

7. Procédé selon la revendication 1, dans lequel la base de données stocke en outre un horodatage dans chaque enregistrement, l'horodatage reflétant une heure relative au stockage du nom de domaine et de l'adresse IP dans l'enregistrement, le procédé comprenant en outre:
après l'envoi de la requête provenant du système de sécurité réseau à la base de données, la détermination (530, 540) de la différence de temps entre l'horodatage et une heure relative à la réception de la demande pour savoir si elle se situe dans une limite prédéfinie,
dans lequel le nom de domaine est envoyé au système de sécurité réseau uniquement si l'on détermine que la différence de temps se situe dans la limite prédéfinie.

8. Procédé selon la revendication 7, dans lequel le nom de domaine est envoyé au système de sécurité réseau uniquement si l'on détermine que la différence de temps se situe en dehors de la limite prédéfinie.

9. Support de stockage lisible par ordinateur sur lequel sont stockées des instructions qui, lorsqu'elles sont exécutées par un processeur, conduisent ledit processeur ou lesdits processeurs à exécuter le procédé selon l'une des revendications 1 à 8.

10. Système comprenant:
un serveur DNS (105) (système de nom de domaine);
un système de sécurité de réseau (145); et
une base de données (120),
dans lequel le serveur DNS est agencé pour traduire les noms de domaine en adresses IP (Protocole Internet), le serveur DNS comprenant une unité de traitement (110) agencée pour recevoir, à partir d'un client, une requête de résolution d'un nom de domaine, la sélection d'une adresse IP à partir d'une plage d'adresses IP attribuées au système de sécurité réseau et par l'intermédiaire desquelles le système de sécurité réseau est accessible, et l'envoi de l'adresse IP sélectionnée au client, l'unité de traitement du serveur DNS étant en outre conçue pour écrire des données de mappage dans la base de données, les données de mappage associant le nom de domaine à l'adresse IP sélectionnée,
dans lequel le système de sécurité de réseau comprend une unité de traitement (160) agencée pour recevoir du client une demande d'accès à une ressource à l'adresse IP sélectionnée, l'envoi d'une requête à la base de données qui stocke les données de mappage, la requête identifiant l'adresse IP sélectionnée, la réception, à partir de la base de données, d'un nom de domaine stocké dans les données de mappage comme étant associé à l'adresse IP sélectionnée, la réémission de la demande vers un serveur représentant le nom de domaine reçu, et s'il existe une première donnée de réponse générées par le serveur, l'envoi de données de réponse reçues du serveur au client, l'unité de traitement du système de sécurité réseau étant en outre conçue pour appliquer au moins un mécanisme de sécurité et/ou de filtrage à un ou plusieurs éléments parmi le nom de domaine, l'adresse IP du serveur et/ou les données de réponse sans exécuter l'une ou les deux étapes que sont la réémission de la demande au serveur et l'envoi de données de réponse au client, si ledit au moins mécanisme de sécurité et/ou de filtrage indiquent qu'au moins une condition prédéfinie de sécurité et/ou de filtrage est réunie, et
dans lequel la base de données stocke une pluralité d'enregistrements comprenant un enregistrement comprenant le nom de domaine et l'adresse IP sélectionnée, la base de données comprenant une unité de traitement (140) agencée pour recevoir en provenance du serveur DNS le nom de domaine et l'adresse IP sélectionnée, le stockage du nom de domaine reçu et adresse IP dans l'enregistrement, la réception à partir du système de sécurité de réseau, de la demande de résolution de l'adresse IP sélectionnée et l'envoi au système de sécurité du réseau le nom de domaine stocké dans l'enregistrement en association avec l'adresse IP sélectionnée.

11. Système selon la revendication 10, agencé pour exécuter le procédé selon l'une quelconque des revendications 2 à 8.
